# EUROPÄISCHE PATENTSCHRIFT

(11) **EP 3 685 236 B1**
(45) Veröffentlichungstag und Bekanntmachung des Hinweises auf die Patenterteilung: **22.12.2021**
(21) Anmeldenummer: 18762911.8
(22) Anmeldetag: 30.07.2018
(51) Int. Cl.: G05B 19/042, G05B 19/418

(54) **SCHALTUNG ZUR KOPPLUNG EINES FELDBUSSES UND EINES LOKALBUSSES**
CIRCUIT FOR COUPLING A FIELD BUS AND A LOCAL BUS
CIRCUIT POUR CONNECTER UN BUS DE TERRAIN ET UN BUS LOCAL

(30) Priorität: 23.09.2017 DE 102017008945
(43) Veröffentlichungstag der Anmeldung: 29.07.2020
(73) Patentinhaber: WAGO Verwaltungsgesellschaft mbH, 32423 Minden (DE)
(72) Erfinder: QUAKERNACK, Frank, 33615 Bielefeld (DE); KIRSTE, Hans-Herbert, 32429 Minden (DE)
(74) Vertreter: Müller, Wolf-Christian
(86) Internationale Anmeldenummer: PCT/IB2018/000822
(87) Internationale Veröffentlichungsnummer: WO 2019/058162

(56) Entgegenhaltungen:
- EP-A2- 1 349 024
- DE-A1-102010 020 446
- DE-A1-102013 106 572

## Beschreibung

Ein Feldbus ist ein Bussystem, das in einer Anlage Feldgeräte wie Messfühler (Sensoren) und Stellglieder (Aktoren) zwecks Kommunikation mit einem Automatisierungsgerät verbindet. Für die Kommunikation zwischen den vorgenannten Feldgeräten gibt es normierte Protokolle. Es sind viele unterschiedliche Feldbussysteme mit unterschiedlichen Eigenschaften am Markt etabliert. Seit 1999 werden Feldbusse in der Norm IEC 61158 (Digital data communication for measurement and control - Fieldbus for use in industrial control systems) standardisiert. Die aktuelle Generation der Feldbustechnik basiert auf Echtzeit-Ethernet. Bekannte Feldbusse sind beispielsweise Ethernet- /IP, PROFIBUS, PROFINET oder EtherCAT.

Aus der WO 2009 124780 A1 ist ein Buskoppler bekannt, der ein von einem externen Netzwerk kommendes netzwerkspezifisches Telegramm in ein internes Datentelegramm umsetzt, welches aus dem netzwerkspezifischen Telegramm lediglich die Nutzdaten überträgt. Ferner enthält das interne Datentelegramm wenigstens ein Zustandsinformationsfeld für interne Steuerinformationen. Das interne Datentelegramm wird vom Buskoppler an ein als internes Bussystem bezeichnetes Lokalbussystem, an welches mehrere Busteilnehmer in Reihe angeschlossen sind, übergeben.

Aus der WO 2014/206680 ist ein Verfahren zum Betreiben eines Feldbuskopplers bekannt, zur Anbindung von Ein-/Ausgangsmodulen an einen Feldbus eines industriellen Automatisierungssystems über einen als Subbus bezeichneten Lokalbus. Dabei empfängt der Feldbuskoppler in einem Normalbetriebsmodus - einen Ausgangswert für einen Ausgangskanal mindestens eines Ein-/Ausgangsmoduls über den Feldbus und leitet diesen über den Subbus an das Ein-/Ausgangsmodul weiter. Der Feldbuskoppler empfängt einen Eingangswert von einem Ein-/Ausgangsmodul über den Subbus und leitet diesen über den Feldbus weiter.

Aus der DE 10 2010 020 446 A1 ist ein Automatisierungsgerät mit mindestens einer Feldbusschnittstelle zum Anschluss an einen Feldbus und Übertragen von Datenpaketen mit Prozessdaten über den Feldbus und mit mindestens einer Lokalbusschnittstelle zum Anschluss an einen lokalen Bus und Übertragen von Prozessdaten zwischen an dem lokalen Bus angeschlossenen Feldgeräten und dem Automatisierungsgerät bekannt. Es sind Mittel vorgesehen, zur Umsetzung der vom Feldbus kommenden Datenpakete in einen Datenstrom für den lokalen Bus und zur Umsetzung des vom lokalen Bus an das Automatisierungsgerät gerichteten Datenstroms in Datenpakete für den Feldbus.

Aus der DE 10 2010 020 446 A1 ist ein Automatisierungsgerät und ein Verfahren zur beschleunigten Verarbeitung von selektierten Prozessdaten bekannt. Dabei sind Mittel zur Umsetzung der vom Feldbus kommenden Datenpakete in einen Datenstrom für den lokalen Bus und zur Umsetzung des vom lokalen Bus an das Automatisierungsgerät gerichteten Datenstroms in Datenpakete für den Feldbus vorgesehen.

Aus der EP 1 349 024 A2 ist eine Kopplungsvorrichtung zum Ankoppeln von Geräten an ein Bussystem bekannt. Die Kopplungsvorrichtung umfasst eine Protokollumsetzeinheit, durch die über die busseitige Schnittstelle empfangene Daten in das standardisierte Kommunikationsprotokoll und über die geräteseitige Schnittstelle empfangene Daten in das Busprotokoll umsetzbar sind.

Aus der DE 10 2013 106 572 A1 ist ein Feldbuskoppler zur Anbindung von Ein-/Ausgangsmodulen an einen Feldbus und ein Betriebsverfahren für einen Feldbuskoppler bekannt. Der Feldbuskoppler empfängt einen Ausgangswert für einen Ausgangskanal über den Feldbus und leitet über den Subbus dieses an das Ein-/Ausgangsmoduls weiter.

Der vorliegenden Erfindung liegt die Aufgabe zu Grunde, eine Schaltung zur Kopplung eines Feldbusses und eines Lokalbusses anzugeben, die möglichst verbessert ist.

Diese Aufgabe wird durch die Merkmale des Anspruchs 1 gelöst. Vorteilhafte Weiterbildungen sind Gegenstand von abhängigen Ansprüchen und in der Beschreibung erläutert.

Es ist eine Schaltung zur Kopplung eines Feldbusses und eines Lokalbusses vorgesehen. Die Schaltung weist einen Feldbuskontroller auf, der zum Senden und Empfangen von Prozessdaten über den Feldbus eingerichtet ist.

Die Schaltung weist einen Lokalbuskontroller auf, der zum Senden und Empfangen der Prozessdaten über den Lokalbus eingerichtet ist.

Die Schaltung weist eine Datenverwaltungseinheit auf. Die Datenverwaltungseinheit ist mit dem Feldbuskontroller und dem Lokalbuskontroller verbunden. Die Datenverwaltungseinheit ist zum Transferieren der Prozessdaten zwischen Feldbuskontroller und Lokalbuskontroller eingerichtet.

Die Schaltung weist einen Speicherbereich auf. Der Speicherbereich ist mit der Datenverwaltungseinheit zum Kopieren und Speichern der Prozessdaten verbunden.

Die Schaltung weist einen Prozessor auf. Der Prozessor ist mit der Datenverwaltungseinheit verbunden. Der Prozessor ist mit dem Speicherbereich verbunden. Der Prozessor ist eingerichtet, die Datenverwaltungseinheit einzustellen zum Kopieren der Prozessdaten in den Speicherbereich. Der Prozessor ist eingerichtet, die in den Speicherbereich kopierten Prozessdaten auszulesen.

Die Schaltung ist vorzugsweise als elektronische Schaltung auf einem Schaltungsträger angeordnet und/oder in einer Anzahl von Halbleiterchips integriert. Ein Feldbus dient zur Kommunikation in einem Automatisierungssystem. Der Feldbus ist gegenüber dem Lokalbus übergeordnet / überlagert. Der Lokalbus ist gegenüber dem Feldbus untergeordnet / unterlagert. Vorteilhafterweise unterscheiden sich der Feldbus und der Lokalbus, insbesondere in den verwendeten Protokollen. Aufgrund der in diesem Fall unterschiedlichen Übertragung des Feldbusses und des Lokalbusses, ist die Schaltung vorzugsweise eingerichtet, das Feldbustelegramm vom Feldbus auf ein Lokalbusdatenpaket des Lokalbusses umzusetzen. Eine Lokalbus-Schnittstelle weist gemäß einer vorteilhaften Ausgestaltung der Erfindung eine spezifische Anschlussmechanik, z.B. in Form von metallischen Kontakten auf.

Der Feldbuskontroller ist dabei eine elektronische Teilschaltung zur Kommunikation über den Feldbus. Der Feldbuskontroller kann auch als Feldbus-Kern (engl. core) bezeichnet werden. Vorzugsweise ist der Feldbuskontroller eingerichtet, die Prozessdaten nach dem Empfang eines Feldbustelegramms aus dem Feldbus-Telegramm herauszunehmen. Vorzugsweise ist der Feldbuskontroller eingerichtet, zum Senden ein Feldbus-Telegramm zu erzeugen und die Prozessdaten in das Feldbustelegramm einzugeben. Entsprechend weist der Feldbuskontroller eine Schnittstelle zum Feldbus auf. Der Feldbuskontroller ist zur Kommunikation über den Feldbus vorzugsweise vollständig hardware-gesteuert, weist also kein frei programmierbares Softwareprogramm für die Kommunikation auf. Der Feldbuskontroller ist beispielweise in einem integrierten Schaltkreis, insbesondere in einer anwendungsspezifischen integrierten Schaltung ASIC (engl. - Application Specific Integrated Circuit) oder FPGA (engl. - Field Programmable Gate Array) implementiert.

Der Lokalbuskontroller ist dabei eine elektronische Teilschaltung zur Kommunikation über den Lokalbus. Vorzugsweise ist der Lokalbuskontroller eingerichtet, die Prozessdaten nach dem Empfang eines Lokalbus-Datenpakets aus dem Lokalbus-Datenpaket herauszunehmen. Vorzugsweise ist der Lokalbuskontroller eingerichtet, zum Senden ein Lokalbus-Datenpaket zu erzeugen und die Prozessdaten in das Lokalbus-Datenpaket einzugeben. Der Lokalbuskontroller kann auch als Lokalbus-Kern (engl. core) bezeichnet werden. Ein Lokalbuskontroller ist dabei im Sinne von mindestens einem Lokalbuskontroller zu verstehen, so dass die Schaltung genau einen oder mehrere Lokalbuskontroller aufweisen kann. Der Lokalbuskontroller weist eine Schnittstelle zum Lokalbus auf. Der Lokalbuskontroller ist zur Kommunikation über den Lokalbus vorzugsweise vollständig hardware-gesteuert, weist also kein frei programmierbares Softwareprogramm für die Kommunikation auf. Der Lokalbuskontroller ist beispielweise in einem integrierten Schaltkreis, insbesondere in einer anwendungsspezifischen integrierten Schaltung ASIC (engl. - Application Specific Integrated Circuit) oder FPGA (engl. - Field Programmable Gate Array) implementiert.

Der Feldbuskontroller der Schaltung ist insbesondere zum Holen von Prozessdaten aus einem Nutzdatenbereich des Feldbus-Telegramms eingerichtet. Der Nutzdatenbereich wird auch als Payload bezeichnet. Ein Feldbuskontroller ist dabei im Sinne von mindestens einem Feldbuskontroller zu verstehen, so dass die Schaltung genau einen oder mehrere Feldbuskontroller aufweisen kann. Die empfangenen Prozessdaten sind vorzugsweise einem oder mehreren Lokalbusteilnehmern zugeordnet. Entsprechend sollen die empfangenen Prozessdaten an Lokalbusteilnehmer über den Lokalbus weitergeleitet werden.

Prozessdaten sind die digitale Repräsentation von analogen und digitalen Werten in einem technischen Prozess. Die Prozessdaten werden vorteilhafterweise aus dem technischen Prozess mittels Sensoren gewonnen und/oder dienen zur Steuerung von Aktoren im technischen Prozess. Die Prozessdaten werden mit dem Feldbus und dem Lokalbus eines Bussystems für den Prozess übertragen.

Die Datenverwaltungseinheit ist dabei eine elektronische Teilschaltung als Zwischenglied zwischen Feldbuskontroller und Lokalbuskontroller. Entsprechend weist die Datenverwaltungseinheit schaltungsinterne Schnittstellen zum Feldbuskontroller und zum Lokalbuskontroller auf. Die Datenverwaltungseinheit ist zum Transfer der Prozessdaten vorzugsweise vollständig hardware-gesteuert, weist also kein frei programmierbares Softwareprogramm für das Transferieren auf. Unter Transferieren wird dabei verstanden, dass die Prozessdaten gesteuert von einem Teil der Schaltung (z.B. Feldbuskontroller), beispielsweise aus einem Buffer derselben in einen anderen Teil der Schaltung (z.B. Lokalbuskontroller), beispielsweise in einem hierfür zugehörigen weiteren Buffer gebracht werden. Die Datenverwaltungseinheit ist beispielweise in einem integrierten Schaltkreis, insbesondere in einer anwendungsspezifischen integrierten Schaltung ASIC (engl. - Application Specific Integrated Circuit) oder FPGA (engl. - Field Programmable Gate Array) implementiert. Eine Verbindung innerhalb der Schaltung kann durch eine feste Leiterbahn, durch einen chip-internen Bus oder dergleichen bewirkt sein. Beispielweise sind die Teilschaltungen, wie Feldbuskontroller, Lokalbuskontroller und Datenverwaltungseinheit untereinander mittels eines 32-Bit Parallelbusses verbunden.

Ein Speicherbereich ist beispielweise ein flüchtiger oder nicht-flüchtiger Speicher. Der Speicherbereich ist vorteilhafterweise als Dual-Port-RAM oder als Mehrfach-Buffer ausgebildet. Beispielweise ist der Speicherbereich in einem integrierten Schaltkreis, insbesondere in einer anwendungsspezifischen integrierten Schaltung ASIC (engl. - Application Specific Integrated Circuit) oder FPGA (engl. - Field Programmable Gate Array) implementiert.

Unter Kopieren ist dabei zu verstehen, dass von den Prozessdaten eine vorzugsweise identische Kopie erzeugt wird, so dass nach dem Kopieren die Prozessdaten zweifach vorliegen. Die Prozessdaten liegen dann beispielweise im Lokalbuskontroller und zugleich im Speicherbereich vor. Original Prozessdaten und kopierte Prozessdaten können getrennt und unabhängig voneinander weiterverarbeitet werden. Die kopierten Prozessdaten können zur Speicherung permanent oder temporär gespeichert werden.

Der Prozessor der Schaltung ist jede Art von Recheneinheit, die zur Ausführung eines in einem Programmspeicher gespeicherten, frei programmierbaren Softwareprogramms eingerichtet und ausgebildet ist. Der Prozessor ist beispielsweise als CPU oder µC oder dergleichen ausgebildet. Das Einstellen des Kopierens der Prozessdaten durch den Prozessor weist vorzugsweise das Setzen von Steuerdaten und/oder Steuerparameter auf. Auch sind zum Einstellen Konfigurationen der Datenverwaltungseinheit durch den Prozessor möglich. Beispielsweise stellt der Prozessor die Datenverwaltungseinheit ein, indem eine Anzahl von Bits in einem der Datenverwaltungseinheit zugehörigen Speicher gesetzt wird. Das Auslesen der Prozessdaten aus dem Speicherbereich durch den Prozessor erfolgt beispielweise, indem der Prozessor einen Lesebefehl und zugehörige Adressen des Speicherbereichs ausgibt oder eine Schaltmatrix ansteuert oder dergleichen.

Gemäß einer vorteilhaften Weiterbildung ist die Datenverwaltungseinheit eingerichtet, im laufenden Betrieb das Transferieren der Prozessdaten zwischen Feldbuskontroller und Lokalbuskontroller unabhängig von einem Programmablauf des Prozessors durchzuführen. Arbeitet die Schaltung störungsfrei, können so im laufenden Betrieb die Ressourcen der Datenverwaltungseinheit und des Prozessors vorteilhafterweise zeitgleich und unabhängig voneinander genutzt werden. Der Prozessor ist somit nicht mit dem Transferieren der Prozessdaten beschäftigt, sondern frei für andere Aufgaben. Außerhalb des laufenden Betriebs kann ein Debugging-Modus gesteuert werden, indem der Prozessor die Kontrolle über die Datenverwaltungseinheit übernimmt.

Gemäß einer vorteilhaften Weiterbildung weist die Datenverwaltungseinheit eine State-Machine zur Steuerung des Transferierens auf. Die State-Machine kann auch als Automat oder Zustandsmaschine bezeichnet werden. Das grundsätzliche Verhalten eines Automaten ist immer gleich: Dem Automaten wird von außen eine Eingabe als Folge von Zeichen vorgelegt. Der Automat befindet sich in einem bestimmten Zustand. Jedes Mal, Wenn ein Eingabezeichen eintrifft, kann sich abhängig vom Eingabezeichen und dem gegenwärtigen Zustand ein neuer Zustand, der Folgezustand, einstellen (Zustandsübergang oder Transition). Die Menge der möglichen Zustandsübergänge definiert das Verhalten des Automaten. Vorzugsweise ist die State-Machine deterministisch.

Gemäß einer vorteilhaften Weiterbildung weist die Datenverwaltungseinheit eine Instruktionsliste mit Instruktionen zur Steuerung des Transferierens auf. Instruktionen werden in die State-Machine eingegeben, so dass die State-Machine die einzelnen Schritte des Transferierens durchführt. Die Instruktionsliste definiert vorteilhafterweise in welcher Reihenfolge die Instruktionen an die State-Machine eingegeben werden.

Gemäß einer vorteilhaften Weiterbildung weist die Instruktionsliste zudem Steuerdaten zur Steuerung des Kopierens auf. Die Steuerdaten sind beispielweise eine Anzahl von Steuerbits je Instruktion. Im einfachsten Fall ist jeder Instruktion ein Steuerbit als Steuerdaten zugehörig. Durch das Steuerbit kann das Kopieren einfach ein- und ausgeschaltet werden. Alternativ sind auch komplexere Steuerungen mit mehreren Bits möglich.

Gemäß einer vorteilhaften Weiterbildung ist die Datenverwaltungseinheit eingerichtet, dass Transferieren und das Kopieren zumindest teilweise zeitgleich auszuführen. Zumindest teilweise zeitgleich bedeutet dabei, dass die eine Zeitdauer des Transferierens und eine Zeitdauer des Kopierens überlappen, vorzugsweise überwiegend überlappen. Ein zeitlicher Versatz kann beispielweise dadurch verursacht werden, dass das Kopieren einige Takte später beginnt als das Transferieren. Vorteilhafterweise ist die Datenverwaltungseinheit eingerichtet, das Transferieren und Kopieren taktgesteuert auszuführen. Dabei ist die Datenverwaltungseinheit vorteilhafterweise eingerichtet, jedes Bit oder Datensymbol, dass in einem Takt transferiert wird im selben Takt auch zu kopieren.

Gemäß einer vorteilhaften Weiterbildung weist die Datenverwaltungseinheit einen Steuerausgang auf. Die Datenverwaltungseinheit ist eingerichtet, das Kopieren durch ein Freigabesignal am Steuerausgang zu steuern. Vorzugsweise basiert das Freigabesignal auf den Steuerdaten in der Instruktionsliste. Beispielweise ist das Freigabesignal logisch High, wenn ein Steuerbit der Steuerdaten ebenfalls logisch High ist. Alternativ kann das Freigabesignal auch durch Berechnung aus den Steuerdaten erzeugt werden.

Gemäß einer vorteilhaften Weiterbildung ist der Prozessor eingerichtet, die Steuerdaten einzustellen, um die transferierten Prozessdaten zu kopieren und weitere Prozessdaten beim Transferieren nicht zu kopieren. Durch die Möglichkeit der Einstellung des Kopieren bzw. Nicht-Kopierens können die Prozessdaten ausgefenstert werden, die in den Speicherbereich kopiert werden sollen. Die weiteren Prozessdaten stehen dem Prozessor dementsprechend nicht zur Verfügung. Hierdurch kann die zu speichernde Menge von Prozessdaten signifikant reduziert werden.

Gemäß einer vorteilhaften Weiterbildung ist der Prozessor eingerichtet, die aus dem Speicherbereich ausgelesenen Prozessdaten auszuwerten. Zum Auswerten ist der Prozessor vorteilhafterweise eingerichtet, die Prozessdaten zu untersuchen und/oder weiter zu verarbeiten und/oder über ein Display anzuzeigen und/oder einer externen Datenverarbeitungseinheit (z.B. PC), beispielweise über den Feldbus oder den Lokalbus oder über eine Service-Schnittstelle zur Verfügung zu stellen.

Gemäß einer vorteilhaften Weiterbildung ist der Prozessor eingerichtet, ein Anfragesignal an die Datenverwaltungseinheit auszugeben. Mittels des Anfragesignals kann der Prozessor neue Prozessdaten des nächsten Transfers von der Datenverwaltungseinheit anfordern. Vorzugsweise ist die Datenverwaltungseinheit eingerichtet, basierend auf dem Anfragesignal das Kopieren der Prozessdaten in den Speicherbereich zu steuern. Alternativ ist es möglich, dass die Datenverwaltungseinheit bei jedem Transferieren die Prozessdaten auch kopiert.

Gemäß einer vorteilhaften Weiterbildung ist die Datenverwaltungseinheit eingerichtet, nach dem Kopieren ein Bestätigungssignal an den Prozessor auszugeben. Das Bestätigungssignal wird dabei vorzugsweise dann erzeugt, wenn die Vollständigkeit des Transfers durch Datenverwaltungseinheit festgestellt wird und/oder die transferierten Daten als gültig bestimmt wurden, und somit keine Fehler enthalten. Vorzugsweise ist der Prozessor eingerichtet, basierend auf dem Bestätigungssignal die gespeicherten Prozessdaten aus dem Speicherbereich auszulesen. Das Auslesen erfolgt vorzugsweise innerhalb einer beliebigen Zeitspanne nach Empfang des Bestätigungssignals durch den Prozessor.

Gemäß einer vorteilhaften Weiterbildung ist der Prozessor eingerichtet, die Prozessdaten aus dem Speicherbereich asynchron zu einem Zyklus auszulesen. Der Zyklus ist beispielweise ein Zyklus zum Empfang der Prozessdaten in einem Feldbustelegramm über den Feldbus, und/oder ein Zyklus zum Transferieren der Prozessdaten, und/oder vorzugsweise ein Zyklus zum Senden eines Datenpakets mit den Prozessdaten auf dem Lokalbus. Asynchron definiert hier, dass das Auslesen nicht an einen Zeitpunkt des Zyklus, beispielweise den Startzeitpunkt des Transferierens, gekoppelt ist, sondern zu einer beliebigen Zeit nach dem Transferieren erfolgen kann.

Gemäß einer vorteilhaften Weiterbildung weist die Schaltung zum Kopieren der Prozessdaten einen Datenleitungsabzweig auf. Dabei ist die Datenverwaltungseinheit über einen ersten Datenleitungsabzweig mit dem Lokalbuskontroller und dem Speicherbereich verbunden. Alternativ oder in Kombination ist die Datenverwaltungseinheit über einen zweiten Datenleitungsabzweig mit dem Feldbuskontroller und dem Speicherbereich verbunden.

Die Aufgabe wird weiterhin durch ein Verfahren zum Betrieb einer Schaltung zur Kopplung eines Feldbusses und eines Lokalbusses gemäß Ansprüchen 14 bzw. 15 gelöst.

In dem Verfahren wird in einem Zyklusrahmen ein Datenpaket mit Prozessdaten von einem Lokalbuskontroller der Schaltung auf den Lokalbus zyklisch gesendet.

In dem Verfahren werden die mit dem Datenpaket gesendeten Prozessdaten zuvor durch einen Feldbuskontroller der Schaltung in einem Feldbustelegramm empfangen.

In dem Verfahren werden die Prozessdaten von dem Feldbuskontroller zu dem Lokalbuskontroller mittels einer Datenverwaltungseinheit transferiert.

In dem Verfahren werden die Prozessdaten in einen Speicherbereich durch die Datenverwaltungseinheit kopiert und im Speicherbereich gespeichert.

In dem Verfahren werden die im Speicherbereich gespeicherten Prozessdaten durch einen Prozessor, insbesondere asynchron zum Zyklusrahmen, ausgelesen.

Die Aufgabe wird weiterhin durch ein Verfahren zum Betrieb einer Schaltung zur Kopplung eines Feldbusses und eines Lokalbusses gelöst.

In dem Verfahren wird basierend auf einem Zyklusrahmen ein Datenpaket mit Prozessdaten von einem Lokalbuskontroller der Schaltung auf den Lokalbus zyklisch empfangen.

In dem Verfahren werden die mit dem Datenpaket empfangenen Prozessdaten durch einen Feldbuskontroller der Schaltung in einem Feldbustelegramm gesendet.

In dem Verfahren werden die Prozessdaten von dem Lokalbuskontroller zu dem Feldbuskontroller mittels einer Datenverwaltungseinheit transferiert.

In dem Verfahren werden die Prozessdaten in einen Speicherbereich durch die Datenverwaltungseinheit kopiert und im Speicherbereich gespeichert.

In dem Verfahren werden die im Speicherbereich gespeicherten Prozessdaten durch einen Prozessor, insbesondere asynchron zum Zyklusrahmen, ausgelesen.

Mögliche Ausgestaltungen der Erfindung sind in der Figurenbeschreibung erläutert. Dabei zeigen
- Figur 1: eine schematische Darstellung einer Schaltung eines Ausführungsbeispiels der Erfindung als Blockschaltbild in einem Automatisierungssystem;
- Figur 2: eine schematische Darstellung einer Schaltung eines Ausführungsbeispiels der Erfindung;
- Figur 3: eine schematische Darstellung einer Schaltung eines Ausführungsbeispiels der Erfindung; und
- Figur 4: ein schematisches Diagramm zur Schaltung gemäß Figur 3.

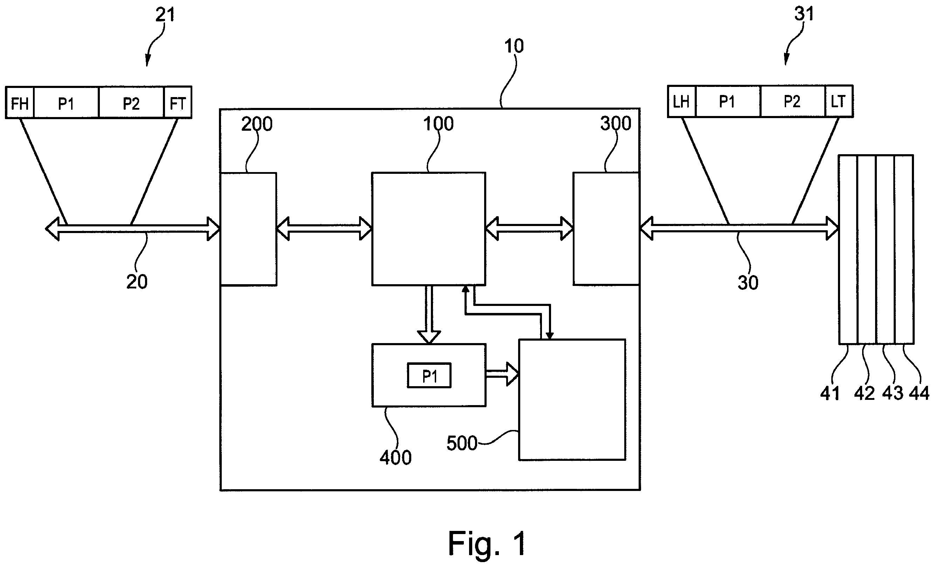

Figur 1 zeigt eine Schaltung 10 als Blockschaltbild. Die Schaltung 10 Bestandteil eines Automatisierungssystems mit einem Feldbus 20 und einen Lokalbus 30 und Lokalbusteilnehmern 41, 42, 43, 44. Weiterhin schematisch dargestellt sind ein Feldbustelegramm 21, das über den Feldbus 20 übertragbar ist und ein Lokalbuspaket 31, das über den Lokalbus 30 übertragbar ist. Der Feldbus 20 kann auch als übergeordneter Bus und der Lokalbus 30 als untergeordneter Bus bezeichnet werden.

Die Schaltung 10 ist im Ausführungsbeispiel der Figur 1 an den Feldbus 20 angeschlossen. Weiterhin können weitere Teilnehmer und ggf. eine Leitstation an den Feldbus 20 angeschlossen sein (in Figur 1 nicht dargestellt). Die Schaltung 10 ist ebenfalls an den Lokalbus 30 angeschlossen. Im Ausführungsbeispiel der Figur 1 ist die Schaltung 10 als Master im Lokalbus 30 eingerichtet. Die anderen Lokalbusteilnehmer 41, 42, 43, 44 sind hingegen als Slaves eingerichtet.

Die Schaltung 10 ist als Master des Lokalbusses 30 vorteilhafterweise derart ausgebildet, dass ein von Master 10 gesendetes Datenpaket 31 durch alle mit dem Lokalbus 30 verbundenen Slaves 41, 42, 43, 44 und an den Master 10 zurück übertragen wird. Dabei empfängt ein Slave 42 von seinem vorgelagerten Slave 41 immer nur einen Teil des Datenpakets 31. Nach einer Zeitspanne in der die in diesem Teil enthaltenen Daten vom Slave 41 verarbeitet werden können, wird der Teil an den nachgelagerten Slave 42 weitergeleitet und gleichzeitig wird von dem Master 10 ein neuer Teil des Datenpakets 31 empfangen. Auf diese Weise passieren alle Teile des Datenpakets 31 sequentiell alle Slaves 41, 42, 43, 44. Der Lokalbus 30 ist vorteilhafterweise in einer ringförmigen Struktur ausgebildet. Derartige Lokalbusse können auch als Ringbus bezeichnet werden. Der Lokalbus kann alternativ auch strangförmig oder sternförmig oder aus einer Kombination oder Mischform der zuvor genannten ausgebildet sein. Das Senden und Empfangen der Datenpakete 31 wird dabei über eine Lokalbusschnittstelle des Masters 10 bewerkstelligt. In dem hier gezeigten Ausführungsbeispiel der Figur weist der Lokalbus 30 eine Abwärts- und eine Aufwärtsverbindung auf, die durch den Doppelpfeil schematisch dargestellt ist.

In dem Ausführungsbeispiel der Figur 1 werden die Busverbindungen des Lokalbusses 30 mit Hilfe von Kabeln oder Leiterplatten zur direkten oder indirekten Kontaktierung mittels elektrischen Kontakten realisiert. Alternativ ist eine drahtlose, optische Verbindung oder Funkverbindung möglich. Im Ausführungsbeispiel der Figur 1 weisen ein Mastergehäuse (nicht dargestellt) mit der Schaltung 10 und die Slaves 41, 42, 43, 44 elektrische Kontakte (nicht dargestellt) für den Lokalbus 30 auf. Zur einfachen Aneinanderreihung des Gehäuses und der Slaves 41, 42, 43, 44 können diese auch auf einer gemeinsamen Aufnahme, zum Beispiel einer Hutschiene angeordnet werden.

Zur leichten Erfassung sind in dem Ausführungsbeispiel der Figur 1 die Slaves 41, 42, 43, 44 sehr vereinfacht dargestellt und können beispielweise einen analogen oder digitalen Eingang und/oder einem analogen oder digitalen Ausgang aufweisen (nicht gezeigt), um Sensoren oder Aktoren für die Prozesssteuerung anschließen zu können. Die Slaves 41, 42, 43, 44 können modular aufgebaut sein, so dass während des Betriebs ein Slave 41 aus dem Bussystem entnommen oder hinzugefügt werden kann. Die Ringbusinfrastruktur wird dabei durch Moduleinheiten aufgebaut und die Slaves 41, 42, 43, 44 sind auswechselbar, so dass der Ringbus 30 mit beliebigen Slavetypen und einer gewünschten Anzahl von Slaves 41, 42, 43, 44 aufgebaut werden kann. Die Module werden häufig auch als E/A Module bezeichnet.

Die Schaltung 10 ist zur Kopplung des Feldbusses 20 und des Lokalbusses 30 ausgebildet und eingerichtet. Die Schaltung 10 kann daher auch als Buskoppler bezeichnet werden. Die Schaltung 10 weist einen Feldbuskontroller 200 auf. Der Feldbuskontroller 200 ist zum Senden und Empfangen von Prozessdaten P1 über den Feldbus 20 eingerichtet. Im Ausführungsbeispiel der Figur 1 sind die Prozessdaten P1 in einem Feldbustelegramm 21 enthalten. Dargestellt sind zudem weitere Prozessdaten P2, sowie ein Feldbus-Kopf FH und ein Feldbus-Tail FT. Je nach verwendetem Feldbustyp kann der Aufbau der Feldbustelegramme unterschiedlich sein. Jedenfalls weist ein Feldbustelegramm die genannten Prozessdaten P1 auf. Angepasst an die Struktur des Feldbustelegramms ist der Feldbuskontroller 200. Im Ausführungsbeispiel der Figur 1 ist der Feldbuskontroller 200 eingerichtet, die Prozessdaten P1 mit einem Feldbustelegramm 21 zu empfangen und die Prozessdaten P1 aus dem empfangenen Feldbustelegramm 21 zu extrahieren. Weiterhin ist im Ausführungsbeispiel der Figur 1 der Feldbuskontroller 200 eingerichtet, ein Feldbustelegramm 21 zu erzeugen und Prozessdaten P1 und die weiteren Prozessdaten P2 in das Feldbustelegramm einzugeben. Hinsichtlich der Prozessdaten P1 und der weiteren Prozessdaten P2 ist Figur 1 eine vereinfachte Darstellung. In Figur 1 sind die Prozessdaten P1 und die weiteren Prozessdaten P2 jeweils zusammenhängend dargestellt. Jedoch können die Prozessdaten P1 auf mehrere Abschnitte aufgeteilt sein.

Die Schaltung 10 weist einen Lokalbuskontroller 300 auf. Der Lokalbuskontroller 300 ist zum Senden und Empfangen der Prozessdaten P1 in einem Datenpaket 31 über den Lokalbus 30 eingerichtet. Im Ausführungsbeispiel der Figur 1 sind die Prozessdaten P1 in einem Datenpaket 31 enthalten. Dargestellt sind zudem weitere Prozessdaten P2, sowie ein Lokalbus-Kopf LH und ein Lokalbus-Tail LT. Je nach verwendetem Lokalbustyp kann der Aufbau der Datenpakete 31 unterschiedlich sein. Auch die Struktur von Feldbustelegramm 21 und Lokalbus-Datenpaket 31 ist in der Regel unterschiedlich. Vorzugsweise ist das Lokalbus-Datenpaket 31 kürzer als das Feldbustelegramm 21.

Jedenfalls weist ein Datenpaket 31 die genannten Prozessdaten P1 auf. Angepasst an die Struktur des Datenpakets 31 ist der Lokalbuskontroller 300. Im Ausführungsbeispiel der Figur 1 ist der Lokalbuskontroller 300 eingerichtet, ein Datenpaket 31 zu erzeugen und Prozessdaten P1 in das Datenpaket 31 einzugeben. Die Prozessdaten P1 werden mit dem Datenpaket 31 auf den Lokalbus 30 gesendet. Hingegen werden empfangene Prozessdaten P1 aus einem empfangenen Datenpaket 31 extrahiert.

Damit die Prozessdaten P1 vom Feldbustelegramm 21 zum Lokalbus-Datenpaket 31 oder vom Lokalbus-Datenpaket 31 zum Feldbustelegramm 21 gelangen, werden diese Prozessdaten P1 durch die Schaltung 10 transferiert.

Die Schaltung 10 weist eine Datenverwaltungseinheit 100 auf. Die Datenverwaltungseinheit 100 ist mit dem Feldbuskontroller 200 und dem Lokalbuskontroller 300 zur Datenübertragung verbunden. Die Datenverwaltungseinheit 100 ist zum Transferieren der Prozessdaten P1 zwischen Feldbuskontroller 200 und Lokalbuskontroller 300 eingerichtet. Dabei können, wie in Figur 1 durch die Doppelpfeile schematisch dargestellt, die Prozessdaten P1 vom Feldbuskontroller 200 zum Lokalbuskontroller 300 über die Datenverwaltungseinheit 100 oder vom Lokalbuskontroller 300 zum Feldbuskontroller 200 über die Datenverwaltungseinheit 100 transferiert werden.

Die Datenverwaltungseinheit 100 ist zudem eingerichtet, die Prozessdaten P1 in einen Speicherbereich 400 zu kopieren. Sind die Prozessdaten P1 auf mehrere Abschnitte aufgeteilt, ist die Datenverwaltungseinheit 100 eingerichtet, die Prozessdaten P1 aus den Abschnitten zu kopieren und vorteilhafterweise im Speicherbereich 400 zusammenzuführen. Im Ausführungsbeispiel der Figur 1 ist die Datenverwaltungseinheit 100 eingerichtet, dass Transferieren und das Kopieren zumindest teilweise zeitgleich auszuführen. Das Kopieren erfolgt dabei wie das Transferieren ebenfalls hardwaregesteuert, so dass im laufenden Betrieb das Kopieren der Prozessdaten P1 unabhängig von einem Softwareprogramm des Prozessors 500 erfolgt.

Bei dem leistungsfähigen Prozessdatensystem der Schaltung 10 im Ausführungsbeispiel der Figur 1 ist es von Vorteil, den Datentransfer mittels Hardware und nicht durch eine Software eines Prozessors durchzuführen. Ein Prozessor 500 ist in Figur 1 ebenfalls dargestellt. Der Prozessor 500 des Ausführungsbeispiels der Figur 1 ist beispielweise als Host-CPU ausgebildet. Dabei wird deutlich, dass der Prozessor 500 nicht das Transferieren der Prozessdaten P1 zwischen Feldbuskontroller 200 und Lokalbuskontroller 300 durchführt. Der Datentransfer mittels Hardware macht den Datentransfer reproduzierbar und deterministisch. Eine Software wird in solch einem System vorwiegend zur Konfiguration und zur Fehlerbehandlung benötigt. Im Ausführungsbeispiel der Figur 1 ist die Datenverwaltungseinheit 100 eingerichtet, im laufenden Betrieb das Transferieren der Prozessdaten P1 zwischen Feldbuskontroller 200 und Lokalbuskontroller 300 unabhängig von einem Programmablauf des Prozessors 500 durchzuführen. Hingegen kann außerhalb des laufenden Betriebs, insbesondere im Debugging der Prozessor 500 beispielweise zur Fehleranalyse unmittelbar auf das Transferieren der Prozessdaten P1 einwirken. Figur 1 zeigt, dass im laufenden Betrieb die Prozessdaten P1 für den Transfer am Prozessor 500 vorbei transportiert werden. Damit der Prozessor 500 im laufenden Betrieb trotz Hardware-Transfers der Prozessdaten P1 dennoch die Möglichkeit hat, die Prozessdaten P1 zu beobachten oder mitzuschneiden, ist der Speicherbereich 400 vorgesehen.

Der Speicherbereich 400 der Schaltung 10 ist mit der Datenverwaltungseinheit 100 zum Kopieren und Speichern der Prozessdaten P1 verbunden. Um dem Prozessor 500 die Möglichkeit zu geben, die Prozessdaten P1 zu erhalten, ist der Prozessor 500 eingerichtet, auf die Kopie der Prozessdaten P1 zuzugreifen. Weiterhin ist der Prozessor 500 mit der Datenverwaltungseinheit 100 verbunden. Dabei ist der Prozessor 500 im Ausführungsbeispiel der Figur 1 eingerichtet, die Datenverwaltungseinheit 100 zumindest zum Kopieren der Prozessdaten P1 in den Speicherbereich 400 einzustellen. Darüber hinaus kann der Prozessor 500 eingerichtet sein, weitere Einstellungen der Datenverwaltungseinheit 100 durchzuführen. Insbesondere ist der Prozessor 500 eingerichtet, die Datenverwaltungseinheit 100 für das Transferieren der Prozessdaten P1 zwischen dem Feldbuskontroller 200 und dem Lokalbuskontroller 300 zu konfigurieren.

Weiterhin ist im Ausführungsbeispiel der Figur 1 der Prozessor 500 mit dem Speicherbereich 400 verbunden. Die Verbindung ist in Figur 1 vereinfacht dargestellt. Zumindest ist der Prozessor 500 eingerichtet, die in den Speicherbereich 400 kopierten Prozessdaten P1 auszulesen. Der Speicherbereich 400 im Ausführungsbeispiel der Figur 1 ist beispielweise als Dual-Port-RAM ausgebildet. Dabei erfolgt die Kommunikation mit dem Prozessor 500 zum Auslesen der Prozessdaten P1 beispielweise über einen Request / Acknowledge Handshake. Alternativ ist der Speicherbereich 400 als Dreifach-Buffer oder als FIFO-Buffer ausgebildet.

In der Ausgestaltung der Figur 1 ist der Prozessor 500 eingerichtet, die aus dem Speicherbereich 400 ausgelesenen Prozessdaten P1 auszuwerten. Zur Auswertung ist der Prozessor 500 beispielsweise eingerichtet, die kopierten Prozessdaten P1 zu untersuchen und/oder weiterzuverarbeiten und/oder einer zur Schaltung 10 externen Datenverarbeitungseinheit (nicht dargestellt) über eine Verbindung zur Verfügung zu stellen. Beispielweise könnte der Prozessor 500 die kopierten Prozessdaten P1 zur Auswertung aufbereiten und auf einem Display als Text oder Item grafisch darstellen.

Im Ausführungsbeispiel der Figur 1 sind zusätzlich zu den transferierten und kopierten Prozessdaten P1 weitere Prozessdaten P2 schematisch dargestellt, die zwar zwischen Feldbuskontroller 200 und Lokalbuskontroller 300 transferiert, jedoch nicht in den Speicherbereich 400 kopiert werden. Vorzugsweise ist die Datenverwaltungseinheit 100 eingerichtet die zu kopierenden Prozessdaten P1 aus den Gesamtprozessdaten auszufiltern. Vorzugsweise ist die Datenverwaltungseinheit 100 eingerichtet die zu kopierenden Prozessdaten P1 durch Ausfensterung aus den Gesamtprozessdaten zu ermitteln. Abweichend von Figur 1 können auch keine weiteren Prozessdaten P2 vorhanden sein, so dass sämtliche Prozessdaten P1 transferiert und auch kopiert werden.

Die gezeigte Automatisierungsanlage in Figur 1 ist nur beispielhaft und alle zu der Automatisierungsanlage gehörenden Elemente, Module, Bauteile, Master, Slave Teilnehmer und Einheiten können von Figur 1 verschieden ausgestaltet sein aber dennoch die hier beschriebenen Grundfunktionalitäten erfüllen.

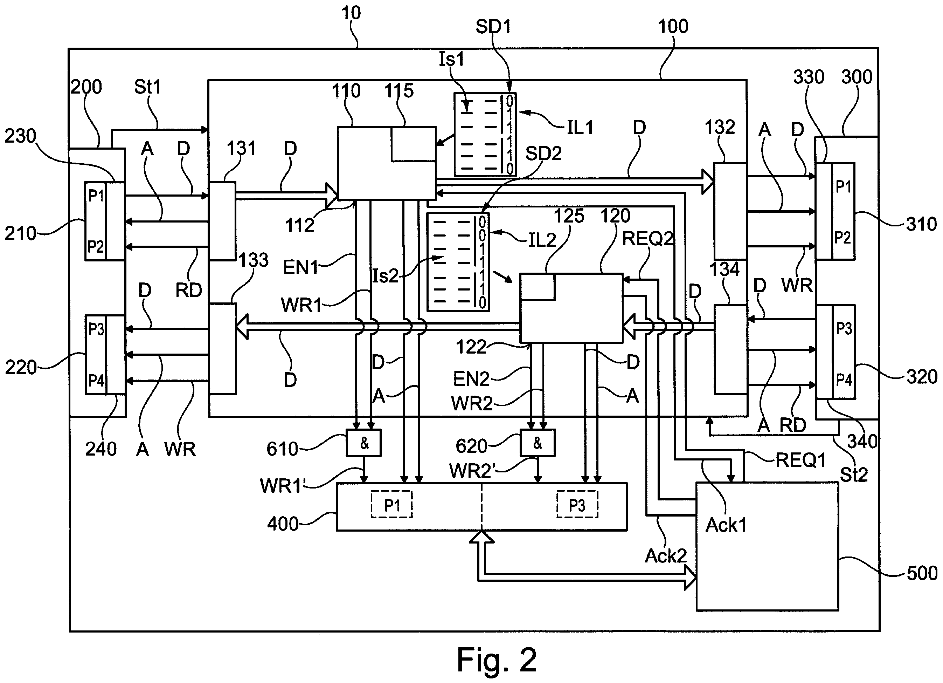

In Figur 2 ist ein Ausführungsbeispiel einer Schaltung 10 zur Kopplung eines Feldbusses und eines Lokalbusses schematisch dargestellt. Das Ausführungsbeispiel zeigt die Schaltung 10 mit einem Feldbuskontroller 200 zum Senden und Empfangen von Prozessdaten P1 über einen Feldbus (in Figur 2 nicht dargestellt) und einem Lokalbuskontroller 300 zum Senden und Empfangen der Prozessdaten P1 über einen Lokalbus (in Figur 2 nicht dargestellt). Zwischen Feldbuskontroller 200 und Lokalbuskontroller 300 ist eine Datenverwaltungseinheit 100 zum Transferieren der Prozessdaten P1 zwischen Feldbuskontroller 200 und Lokalbuskontroller 300 verbunden. Die Schaltung 10 weist einen Speicherbereich 400 mit zwei Teilbereichen auf, der mit der Datenverwaltungseinheit 100 zum Kopieren und Speichern der Prozessdaten P1 verbunden ist. Die Schaltung weist einen Prozessor 500 auf, der mit der Datenverwaltungseinheit 100 zur Einstellung des Kopierens der Prozessdaten P1 und mit dem Speicherbereich 400 zum Auslesen der kopierten Prozessdaten P1 verbunden ist.

Figur 2 zeigt eine schematische Darstellung der Schaltung 10 als Blockschaltbild. Dabei sind zur Vereinfachung einige Datenleitungen mit D und einige Adressleitungen mit A bezeichnet, Um im Ausführungsbeispiel der Figur 2 dem Prozessor 500 die Möglichkeit zu geben, die Prozessdaten P1, P3 zu erhalten, weist die Datenverwaltungseinheit 100 eine erste Datentransfereinheit 110 und eine zweite Datentransfereinheit 120 auf, wobei der ersten Datentransfereinheit 110 ein erster Teilbereich und der zweiten Datentransfereinheit 120 ein zweiter Teilbereich des Speicherbereichs 400 zugeordnet ist. Durch von einander getrennte Adressleitungen A schreibt die erste Datentransfereinheit 110 ausschließlich in den ersten Teilbereich und die zweite Datentransfereinheit 120 ausschließlich in den zweiten Teilbereich. Durch diese Trennung in Teilbereiche und getrennte Adressleitungen können die erste Datentransfereinheit 110 und die zweite Datentransfereinheit 120 unabhängig von einander, insbesondere auch gleichzeitig in den Speicherbereich 400 schreiben. Im Ausführungsbeispiel der Figur 2 kann der Speicherbereich 400 auch als Prozessdatenspiegelspeicher bezeichnet werden. Aus Sicht des Prozessors 500 bilden im Ausführungsbeispiel der Figur 2 der erste Teilbereich und der zweite Teilbereich des Speicherbereichs 400 einen Adressraum.

Der Prozessor 500 ist eingerichtet, mittels einer Konfiguration der ersten Datentransfereinheit 110 und/oder der zweiten Datentransfereinheit 120 im Vorhinein festzulegen, welche Prozessdaten P1, P3 in dem Speicherbereich 400 abgelegt werden. Zur Steuerung des Datentransfers zwischen Feldbuskontroller 200 und Lokalbuskontroller 300 weist die Datenverwaltungseinheit 100 eine State-Machine 115, 125 auf. Im Ausführungsbeispiel der Figur 2 weist die erste Datentransfereinheit 110 der Datenverwaltungseinheit 100 eine erste State-Machine 115 und die zweite Datentransfereinheit 120 weist eine zweite State-Machine 125 auf. Die State-Machine 115, 125 kann auch als Zustandsautomat bezeichnet werden. Die State-Machine 115, 125 ist dabei durch eine Hardware gebildet, die unabhängig von einer Software das Transferieren der Prozessdaten P1, P3 durchführt. Im Ausführungsbeispiel der Figur 2 ist die State-Machine 115, 125 durch den Prozessor 500 einstellbar. Zur Einstellung ist die State-Machine 115, 125 durch den Prozessor 500 vorzugsweise programmierbar oder konfigurierbar.

Vorteilhafterweise weist die Datenverwaltungseinheit 100 eine Instruktionsliste IL1, IL2 mit Instruktionen IS1, IS2 zur Steuerung des Transferierens auf. Im Ausführungsbeispiel der Figur 2 ist der ersten Datentransfereinheit 110 eine erste Instruktionsliste IL1 zugeordnet. Entsprechend ist der zweiten Datentransfereinheit 120 eine zweite Instruktionsliste IL2 zugeordnet. Die erste Instruktionsliste IL1 weist dabei vom Prozessor 500 einstellbare Instruktionen IS1 zur Steuerung der ersten Datentransfereinheit 110 auf. Die zweite Instruktionsliste IL2 weist entsprechend vom Prozessor 500 einstellbare Instruktionen IS2 zur Steuerung der zweiten Datentransfereinheit 120 auf.

Im Ausführungsbeispiel der Figur 2 weist die Datenverwaltungseinheit 100 Master-Schnittstellen 131, 132, 133, 134 auf, die mit Slave-Schnittstellen 230, 240 des Feldbuskontrollers 200 und mit Slave-Schnittstellen 330, 340 des Lokalbuskontrollers 300 über Datenleitungen D, Adressleitungen A und Steuerleitungen RD, WR1, WR2, WR1', WR2' verbunden sind. Initiiert durch ein Startsignal über die Steuerleitung St1 steuert die Master-Schnittstelle 131 über die Steuerleitung RD und die Slave-Schnittstelle 230 beispielweise ein Auslesen des Buffers 210 des Feldbuskontrollers 200 mit den Prozessdaten P1 und den weiteren Prozessdaten P2. Das Auslesen erfolgt beispielweise über die Adressleitung A symbolweise, wobei jedes Symbol eine feste Bitbreite von beispielweise 32 Bit, 16 Bit oder 8 Bit aufweist. Beispielweise steuert die Master-Schnittstelle 132 über die Steuerleitung WR und die Slave-Schnittstelle 330 ein Eingeben in den Buffer 310 des Lokalbuskontrollers 300 mit den Prozessdaten P1 und den weiteren Prozessdaten P2. Das Eingeben erfolgt entsprechend über die Adressleitung A wiederum symbolweise. Auch in der anderen Richtung ist ein Transfer dargestellt. Initiiert durch ein Startsignal über die Steuerleitung St2 steuert die Master-Schnittstelle 134 über die Steuerleitung RD und die Slave-Schnittstelle 340 ein Auslesen des Buffers 320 des Lokalbuskontrollers 300 mit den Prozessdaten P3 und den weiteren Prozessdaten P4. Das Auslesen erfolgt beispielweise über die Adressleitung A symbolweise. Beispielweise steuert die Master-Schnittstelle 133 über die Steuerleitung WR und die Slave-Schnittstelle 240 ein Eingeben in den Buffer 220 des Feldbuskontrollers 200 mit den Prozessdaten P3 und den weiteren Prozessdaten P4. Das Eingeben erfolgt entsprechend über die Adressleitung A wiederum symbolweise.

Im Ausführungsbeispiel der Figur 2 ist die erste Datentransfereinheit 110 eingerichtet, basierend auf den Instruktionen IS1 der ersten Instruktionsliste IL1 Prozessdaten P1 vom Feldbuskontroller 200 zum Lokalbuskontroller 300 zu transferieren. Die zweite Datentransfereinheit 120 ist eingerichtet, basierend auf den Instruktionen IS2 der zweiten Instruktionsliste IL2 Prozessdaten P3 vom Lokalbuskontroller 300 zum Feldbuskontroller 200 zu transferieren.

Vorzugsweise weist die Instruktionsliste IL1, IL2 Steuerdaten SD1, SD2 zur Steuerung des Kopierens auf. Im Ausführungsbeispiel der Figur 2 weist jede Instruktionsliste IL1, IL2 separate Steuerdaten SD1, SD2 auf. Die Datenverwaltungseinheit 100 weist einen Steuerausgang 112, 122 auf und ist eingerichtet, dass Kopieren durch ein Freigabesignal EN1, EN2 am Steuerausgang 112, 122 zu steuern. Im Ausführungsbeispiel der Figur 2 sind binäre Steuerdaten SD1 in der ersten Instruktionsliste IL1 der ersten Datentransfereinheit 110 enthalten. Die binären Steuerdaten SD1 sind durch den Prozessor 500 einstellbar, so dass die Prozessdaten P1 transferiert und in den Speicherbereich 400 kopiert, hingegen die weiteren Prozessdaten P2 zwar transferiert nicht jedoch in den Speicherbereich 400 kopiert werden. Die erste Datentransfereinheit 110 der Datenverwaltungseinheit 100 ist eingerichtet, basierend auf den binären Steuerdaten SD1 ein erstes Freigabesignal EN1 am Steuerausgang 112 zu erzeugen. Die Schaltung 10 weist eine logische UND-Verknüpfung 610, beispielweise in Form eines UND-Gatters auf, wobei das erste Freigabesignal EN1 mit einem Steuersignal auf der Steuerleitung WR1 verundet wird und auf einer ersten Steuerleitung WR1' zum Speicherbereich 400 ein Steuersignal ausgibt, dass das Speichern der Prozessdaten P1 im Speicherbereich 400 steuert.

Im Ausführungsbeispiel der Figur 2 sind binäre Steuerdaten SD2 in der zweiten Instruktionsliste IL2 der zweiten Datentransfereinheit 120 enthalten. Die binären Steuerdaten SD2 sind durch den Prozessor 500 einstellbar, so dass die Prozessdaten P3 transferiert und in den Speicherbereich 400 kopiert, hingegen die weiteren Prozessdaten P4 zwar transferiert, nicht jedoch in den Speicherbereich 400 kopiert werden. Die zweite Datentransfereinheit 120 der Datenverwaltungseinheit 100 ist eingerichtet, basierend auf den binären Steuerdaten SD2 ein zweites Freigabesignal EN2 am Steuerausgang 122 zu erzeugen. Die Schaltung 10 weist eine logische UND-Verknüpfung 620, beispielweise in Form eines UND-Gatters auf, wobei das zweite Freigabesignal EN2 mit einem Steuersignal auf der Steuerleitung WR2 verundet wird und auf einer zweiten Steuerleitung WR2' zum Speicherbereich 400 ein Steuersignal ausgibt, dass das Speichern der Prozessdaten P3 im Speicherbereich 400 steuert.

Vorzugsweise ist der Prozessor 500 eingerichtet, ein Anfragesignal REQ1, REQ2 an die Datenverwaltungseinheit 100 auszugeben und die Datenverwaltungseinheit 100 ist eingerichtet, basierend auf dem Anfragesignal REQ1, REQ2 das Kopieren der Prozessdaten P1 in den Speicherbereich 400 zu steuern. Im Ausführungsbeispiel der Figur 2 ist der Prozessor 500 mit der ersten Datentransfereinheit 110 und der zweiten Datentransfereinheit 120 verbunden.

Mittels des ersten Anfragesignals REQ1 steuert der Prozessor 500 den Kopierprozess durch die erste Datentransfereinheit 110 an. Die über den Feldbus empfangenen Prozessdaten P1 werden durch die erste Datentransfereinheit 110 transferiert und in den Speicherbereich 400 kopiert. Die erste Datentransfereinheit 110 der Datenverwaltungseinheit 100 ist eingerichtet, nach dem Kopieren ein erstes Bestätigungssignal ACK1 an den Prozessor 500 auszugeben. Der Prozessor 500 ist eingerichtet, basierend auf dem ersten Bestätigungssignal ACK1 die gespeicherten Prozessdaten P1 aus dem Speicherbereich 400 auszulesen. Mittels eines zweiten Anfragesignals REQ2 steuert der Prozessor 500 den Kopierprozess durch die zweite Datentransfereinheit 120 an. Die über den Lokalbus empfangenen Prozessdaten P3 werden durch die zweite Datentransfereinheit 120 transferiert und in den Speicherbereich 400 kopiert. Die zweite Datentransfereinheit 120 der Datenverwaltungseinheit 100 ist eingerichtet, nach dem Kopieren ein zweites Bestätigungssignal ACK2 an den Prozessor 500 auszugeben. Der Prozessor 500 ist eingerichtet, basierend auf dem zweiten Bestätigungssignal ACK2 die gespeicherten Prozessdaten P3 aus dem Speicherbereich 400 auszulesen.

Durch das Ausführungsbeispiel der Figur 2 werden mehrere Vorteile erzielt. Zunächst arbeitet die Datenverwaltungseinheit 100 von dem Prozessor 500 unabhängig den Transfer der Prozessdaten P1, P2, P3, P4 ab. Daher wird Rechenleistung des Prozessors 500 für den Transfer nicht benötigt. Entsprechend kann der Prozessor 500 keine Verzögerung des Transfers verursachen, Latenzen werden minimiert. Aufgrund der Hardware-Steuerung der Datenverwaltungseinheit 100 ist der Transfer der Prozessdaten P1, P2, P3, P4 vollständig deterministisch, so hat weder eine Software noch ein externes Ereignis, wie ein Interrupt-Ereignis, einen Einfluss auf den Transfer. Ein weiterer Vorteil ist, dass parallel zur Kommunikation mittels des Transfers ein Software-Programm durch den Prozessor 500 abgearbeitet wird. Ein synergetischer Vorteil ist, dass in dem Software-Programm des Prozessors 500 zuvor transferierte Prozessdaten P1, P3 verarbeitet werden können. Im Ausführungsbeispiel der Figur 2 wird dabei der Vorteil erzielt, dass durch die Steuerdaten SD1, SD2 die kopierten Prozessdaten P1, P3 ausgefenstert / gefiltert werden können, so dass ein kleinerer Speicherbereich 400 benötigt wird. Dennoch können alle benötigten Prozessdaten P1, P3 dem Prozessor 500 zur Verfügung gestellt werden.

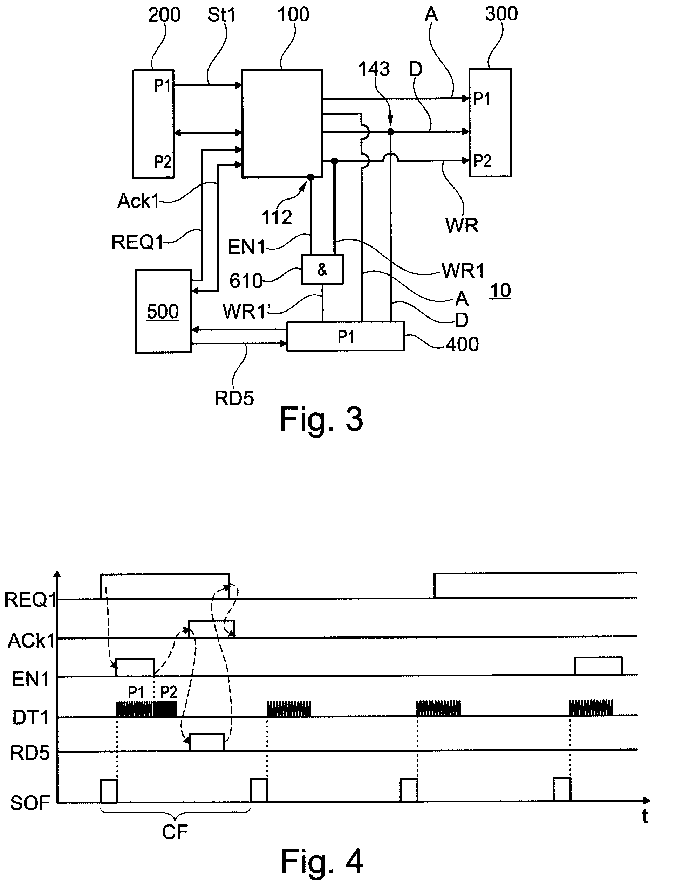

In Figur 3 ist ein einfaches Ausführungsbeispiel als Blockschaltplan schematisch dargestellt. Figur 3 zeigt ebenfalls eine Schaltung 10 zur Kopplung eines Feldbusses (nicht dargestellt) und eines Lokalbusses (nicht dargestellt). Die Schaltung 10 weist einen Feldbuskontroller 200, einen Lokalbuskontroller 300 und eine Datenverwaltungseinheit 100 auf. Die Datenverwaltungseinheit 100 ist mit dem Feldbuskontroller 200 und dem Lokalbuskontroller 300 verbunden. Die Datenverwaltungseinheit 100 ist zum Transferieren von Prozessdaten P1 zwischen Feldbuskontroller 200 und Lokalbuskontroller 300 eingerichtet. Die Schaltung 10 weist einen Speicherbereich 400 auf, wobei der Speicherbereich 400 mit der Datenverwaltungseinheit 100 zum Kopieren und Speichern der Prozessdaten P1 verbunden ist. Weiterhin weist die Schaltung 10 einen Prozessor 500 zur Ausführung eines Softwareprogramms auf. Der Prozessor 500 ist mit der Datenverwaltungseinheit 100 und mit dem Speicherbereich 400 verbunden. Der Prozessor 500 ist eingerichtet, die Datenverwaltungseinheit 100 zum Kopieren der Prozessdaten P1 in den Speicherbereich 400 einzustellen und die in den Speicherbereich 400 kopierten Prozessdaten P1 auszulesen. Hierzu sendet der Prozessor 500 den Auslesebefehl RD5 an den Speicherbereich 400.

Im Ausführungsbeispiel der Figur 3 weist die Schaltung 10 zum Kopieren der Prozessdaten P1 einen Datenleitungsabzweig 143 auf. Dieser Datenleitungsabzweig 143 ist in Form einer Y-Verbindung aufgebaut. Dabei ist die Datenleitung D am Ausgang der Datenverwaltungseinheit 100 sowohl mit Lokalbuskontroller 300 als auch mit dem Speicherbereich 400 verbunden. Die Verbindung kann beispielweise eine Breite von 32 Bit aufweisen, so dass für jedes Bit eine Abzweigung im Datenleitungsabzweig 143 vorgesehen ist. Hierdurch ist die Datenverwaltungseinheit 100 über den Datenleitungsabzweig 143 mit dem Lokalbuskontroller 300 und dem Speicherbereich 400 verbunden. Entsprechend kann die Datenverwaltungseinheit 100 über einen weiteren Datenleitungsabzweig mit dem Feldbuskontroller 200 und dem Speicherbereich 400 verbunden sein (in Figur 3 nicht dargestellt). Die Schaltung 10 im Ausführungsbeispiel der Figur 3 weist weiterhin eine UND-Verknüpfung 610, beispielweise in Form eines UND-Gatters auf. Das Schreib-Steuersignal auf der Steuerleitung WR1 wird entsprechend mit einem Freigabesignal auf der Freigabeleitung EN1 mittels der UND-Verknüpfung verknüpft. Das Schreib-Steuersignal auf der Steuerleitung WR1 wird beim Transfer der Prozessdaten P1 von der Datenverwaltungseinheit 100 an den Lokalbuskontroller 300 ausgegeben. Dabei wird zeitgleich an den Speicherbereich 400 über die UND-Verknüpfung 610 und angeschlossene Steuerleitung WR1' das Schreib-Steuersignal ausgegeben, wenn das Freigabesignal auf der Freigabeleitung EN1 dies freigibt, entsprechend im Ausführungsbeispiel der Figur 3 High-Potential aufweist. Ein Adresssignal wird über eine Adressleitung A von der Datenverwaltungseinheit 100 an den Lokalbuskontroller 300 ausgegeben. Ein weiteres Adresssignal wird über eine weitere Adressleitung A von der Datenverwaltungseinheit 100 an den Speicherbereich 400 ausgegeben. Beide Adresssignale werden vorteilhafterweise zeitgleich ausgegeben. Beispielweise ist es möglich, unterschiedliche Adressen durch einen Offset auf das Adresssignal zu erzeugen (in Figur 3 nicht dargestellt). In einem anderen, in Figur 3 nicht dargestellten Ausführungsbeispiel entfällt die Adressleitung A zum Lokalbuskontroller 300, indem die Daten P1, P2 über die Datenleitung D z.B. immer an dieselbe Adresse eines FIFOs geschrieben werden.

Beispielweise durch die Schaltung 10 des Ausführungsbeispiels der Figur 3 kann ein Verfahrensablauf eines Ausführungsbeispiels der Erfindung durchgeführt werden, zu dem ein schematisches Zeitdiagramm in Figur 4 dargestellt ist. Hierzu ist der Prozessor 500 der Schaltung 10 der Figur 3 eingerichtet, die Prozessdaten P1 aus dem Speicherbereich 400 asynchron zu einem Zyklus auszulesen. Der Zyklus ist beispielweise ein Zyklus zum Empfang der Prozessdaten P1 in einem Feldbustelegramm 21 über den Feldbus 20 gemäß Figur 1. Alternativ ist der Zyklus ein Zyklus zum Transferieren der Prozessdaten P1 durch die Datenverwaltungseinheit 100. Bevorzugt ist der Zyklus ein Zyklus zum Senden eines Datenpakets 31 mit den Prozessdaten P1 auf dem Lokalbus 30 gemäß Figur 1.

Das Ausführungsbeispiel der Figur 4 zeigt einen Zyklusrahmen CF eines Zyklus zum Senden eines Datenpakets 31 auf dem Lokalbus 30, wie in Figur 1 gezeigt. Der Zyklusrahmen CF ist durch Zyklusrahmenpaket SOF definiert, das in im Wesentlichen konstantem Zeitabstand auf den Lokalbus 30 gesendet wird. Zwischen zwei Zyklusrahmenpaketen SOF können die Datenpakete 31 mit Prozessdaten P1, P2 über den Lokalbus 30 übertragen werden. Entsprechend wird in einem Ausführungsbeispiel in einem Zyklusrahmen CF ein Datenpaket 31 mit Prozessdaten P1 von dem Lokalbuskontroller 300 der Schaltung 10 auf den Lokalbus 31 zyklisch gesendet. Vor dem Senden der Prozessdaten P1 werden die Prozessdaten P1 durch den Feldbuskontroller 200 der Schaltung 10 in einem Feldbustelegramm 21 empfangen.

Die Prozessdaten P1 werden von dem Feldbuskontroller 200 zu dem Lokalbuskontroller 300 mittels der Datenverwaltungseinheit 100 transferiert. Der Datentransfer DT1 ist Figur 4 für die Gesamtprozessdaten P1, P2 als schematisches Signal dargestellt. Im Ausführungsbeispiel der Figur 4 sendet der Prozessor 500 ein Anforderungssignal REQ1 an die Datenverwaltungseinheit 100. Prozessdaten P1 werden in den Speicherbereich 400 durch die Datenverwaltungseinheit 100 kopiert und im Speicherbereich 400 gespeichert. Dabei werden die Prozessdaten P1 durch das Freigabesignal EN1 ausgefenstert, weitere Prozessdaten P2 werden nur transferiert, nicht jedoch im Speicherbereich 400 gespeichert. Nach vollständiger Speicherung der Prozessdaten P1 im Speicherbereich 400 sendet die Datenverwaltungseinheit 100 ein Bestätigungssignal ACK1 an den Prozessor 500 und signalisiert damit, dass die gespeicherten Prozessdaten P1 ausgelesen werden können. Die im Speicherbereich 400 gespeicherten Prozessdaten P1 werden im Ausführungsbeispiel der Figur 4 durch den Prozessor 500 asynchron zum Zyklusrahmen CF ausgelesen. Hierzu sendet der Prozessor 500 zu einem beliebigen Zweitpunkt nach dem Bestätigungssignal ACK1 ein Auslesesignal RD5 an den Speicherbereich 400, wie im Diagramm der Figur 4 schematisch dargestellt. Die Abhängigkeit der Signalflanken ist in Figur 4 durch strichlinierte Pfeile schematisch dargestellt.

In einem anderen Ausführungsbeispiel gemäß Figur 1 erfolgt der Kopiervorgang bei einem Transferieren vom Lokalbuskontroller 300 zum Feldbuskontroller 200. Dabei wird basierend auf einem Zyklusrahmen CF ein Datenpaket 31 mit Prozessdaten P1 von dem Lokalbuskontroller 300 der Schaltung 10 auf den Lokalbus 30 zyklisch empfangen. Ein zyklischer Empfang des Datenpakets auf dem Lokalbus kann insbesondere erfolgen, wenn alle Teilnehmer das Datenpaket in einem konstanten Zeitabstand weiterleiten. Die mit dem Datenpaket 31 empfangenen Prozessdaten P1 werden durch den Feldbuskontroller 200 der Schaltung 10 in einem Feldbustelegramm 21 gesendet. Wird ein Datenpaket 31 auf dem Lokalbus 30 von dem Lokalbuskontroller 300 empfangen, werden die Prozessdaten P1 von dem Lokalbuskontroller 300 zu dem Feldbuskontroller 200 mittels der Datenverwaltungseinheit 100 transferiert. Die Prozessdaten P1 werden zeitgleich in den Speicherbereich 400 durch die Datenverwaltungseinheit 100 kopiert und im Speicherbereich 400 gespeichert. Zu einem späteren, durch den Prozessor 500 festlegbaren Zeitpunkt werden die im Speicherbereich 400 gespeicherten Prozessdaten P1 durch einen Prozessor 500 ausgelesen.

### Bezugszeichenliste

- 10: Schaltung
- 20: Feldbus, überlagerter Bus
- 21: Feldbustelegramm
- 30: Lokalbus, unterlagerter Bus
- 31: Datenpaket
- 41, 42, 43, 44: Lokalbusteilnehmer
- 100: Datenverwaltungseinheit
- 110, 120: Datentransfereinheit
- 112, 122: Steuerausgang
- 115, 125: State-Machine, Automat
- 131, 132, 133, 134: Master-Schnittstelle
- 143: Datenleitungsabzweig
- 200: Feldbuskontroller
- 210, 220: Buffer
- 230, 240: Slave-Schnittstelle
- 300: Lokalbuskontroller
- 310, 320: Buffer
- 330, 340: Slave-Schnittstelle
- 400: Speicherbereich
- 500: Prozessor
- 610, 620: Logische Verknüpfung, Gatter

- A: Adressleitung
- ACK1, ACK2: Bestätigungsleitung, Bestätigungssignal
- CF: Zyklusrahmen
- D: Datenleitung
- DT1: Datentransfer
- EN1, EN2: Freigabeleitung, Freigabesignal
- FH: Feldbus-Kopf
- LH: Lokalbus-Kopf
- FT: Feldbus-Tail
- LT: Lokalbus-Tail
- IL1, IL2: Instruktionsliste
- IS1, IS2: Instruktionen
- P1, P3: Prozessdaten
- P2, P4: weitere Prozessdaten
- REQ1, REQ2: Anfrageleitung, Anfragesignal
- RD5: Ausleseleitung, Auslesesignal
- SD1, SD2: Steuerdaten
- SOF: Zyklusrahmenpaket
- St1, St2, RD, WR, WR1, WR2, WR1', WR2': Steuerleitung, Steuersignal

## Patentansprüche

1. Schaltung (10) zur Kopplung eines Feldbusses (20) und eines Lokalbusses (30),
- mit einem Feldbuskontroller (200), eingerichtet zum Senden und Empfangen von Prozessdaten (P1) über den Feldbus (20),
- mit einem Lokalbuskontroller (300), eingerichtet zum Senden und Empfangen der Prozessdaten (P1) über den Lokalbus (30),
- mit einer Datenverwaltungseinheit (100), wobei die Datenverwaltungseinheit (100) mit dem Feldbuskontroller (200) und dem Lokalbuskontroller (300) verbunden ist, und wobei die Datenverwaltungseinheit (100) zum Transferieren der Prozessdaten (P1) zwischen Feldbuskontroller (200) und Lokalbuskontroller (300) eingerichtet ist,
- mit einem Speicherbereich (400), wobei der Speicherbereich (400) mit der Datenverwaltungseinheit (100) zum Kopieren und Speichern der Prozessdaten (P1) verbunden ist, und
- mit einem Prozessor (500), wobei der Prozessor (500) mit der Datenverwaltungseinheit (100) verbunden ist, und wobei der Prozessor (500) mit dem Speicherbereich (400) verbunden ist,
bei der der Prozessor (500) eingerichtet ist, die Datenverwaltungseinheit (100) einzustellen zum Kopieren der Prozessdaten (P1) in den Speicherbereich (400),
bei der der Prozessor (500) eingerichtet ist, die in den Speicherbereich (400) kopierten Prozessdaten (P1) auszulesen.

2. Schaltung nach Anspruch 1,
bei der die Datenverwaltungseinheit (100) eingerichtet ist, im laufenden Betrieb das Transferieren der Prozessdaten (P1) zwischen Feldbuskontroller (200) und Lokalbuskontroller (300) unabhängig von einem Programmablauf des Prozessors (500) durchzuführen.

3. Schaltung nach einem der vorhergehenden Ansprüche,
bei der die Datenverwaltungseinheit (100) eine State-Machine (115, 125) zur Steuerung des Transferierens aufweist.

4. Schaltung nach einem der vorhergehenden Ansprüche,
bei der die Datenverwaltungseinheit (100) eine Instruktionsliste (IL1, IL2) mit Instruktionen (IS1, IS2) zur Steuerung des Transferierens aufweist.

5. Schaltung nach Anspruch 4,
bei der die Instruktionsliste (IL1, IL2) Steuerdaten (SD1, SD2) zur Steuerung des Kopierens aufweist.

6. Schaltung nach einem der vorhergehenden Ansprüche,
bei der die Datenverwaltungseinheit (100) eingerichtet ist, dass Transferieren und das Kopieren zumindest teilweise zeitgleich auszuführen.

7. Schaltung nach einem der vorhergehenden Ansprüche,
bei der die Datenverwaltungseinheit (100) einen Steuerausgang (112, 122) aufweist und eingerichtet ist, dass Kopieren durch ein Freigabesignal (EN1, EN2) am Steuerausgang (112, 122) zu steuern.

8. Schaltung nach einem der vorhergehenden Ansprüche,
bei der der Prozessor (500) eingerichtet ist, dass mittels des Prozessors (500) die Steuerdaten (SD1, SD2) einstellbar sind, um die transferierten Prozessdaten (P1) zu kopieren und weitere Prozessdaten (P2) beim Transferieren nicht zu kopieren.

9. Schaltung nach einem der vorhergehenden Ansprüche,
bei der der Prozessor (500) eingerichtet ist, die aus dem Speicherbereich (400) ausgelesenen Prozessdaten (P1) auszuwerten.

10. Schaltung nach einem der vorhergehenden Ansprüche,
bei der der Prozessor (500) eingerichtet ist, ein Anfragesignal (REQ1, REQ2) an die Datenverwaltungseinheit (100) auszugeben,
bei der die Datenverwaltungseinheit (100) eingerichtet ist, basierend auf dem Anfragesignal (REQ1, REQ2) das Kopieren der Prozessdaten (P1) in den Speicherbereich (400) zu steuern.

11. Schaltung nach einem der vorhergehenden Ansprüche,
bei der die Datenverwaltungseinheit (100) eingerichtet ist, nach dem Kopieren ein Bestätigungssignal (ACK1, ACK2) an den Prozessor (500) auszugeben,
bei der der Prozessor (500) eingerichtet ist, basierend auf dem Bestätigungssignal (ACK1, ACK2) die gespeicherten Prozessdaten (P1) aus dem Speicherbereich (400) auszulesen.

12. Schaltung nach einem der vorhergehenden Ansprüche,
bei der der Prozessor (500) eingerichtet ist, die Prozessdaten (P1) aus dem Speicherbereich (400) asynchron zu einem Zyklus, insbesondere asynchron zu
- einem Zyklus zum Empfang der Prozessdaten (P1) in einem Feldbustelegramm (21) über den Feldbus (20), und/oder
- einem Zyklus zum Transferieren der Prozessdaten (P1), und/oder
- einem Zyklus zum Senden eines Datenpakets (31) mit den Prozessdaten (P1) auf dem Lokalbus (30), auszulesen.

13. Schaltung nach einem der vorhergehenden Ansprüche,
die zum Kopieren der Prozessdaten (P1) einen Datenleitungsabzweig (143) aufweist,
wobei die Datenverwaltungseinheit (100) über den Datenleitungsabzweig (143) mit dem Lokalbuskontroller (300) und dem Speicherbereich (400) verbunden ist, oder
wobei die Datenverwaltungseinheit (100) über den Datenleitungsabzweig mit dem Feldbuskontroller (200) und dem Speicherbereich (400) verbunden ist.

14. Verfahren zum Betrieb einer Schaltung (10) zur Kopplung eines Feldbusses (20) und eines Lokalbusses (30),
- bei dem in einem Zyklusrahmen (CF) ein Datenpaket (31) mit Prozessdaten (P1) von einem Lokalbuskontroller (300) der Schaltung (10) auf den Lokalbus (31) zyklisch gesendet wird,
- bei dem die mit dem Datenpaket (31) gesendeten Prozessdaten (P1) zuvor durch einen Feldbuskontroller (200) der Schaltung (10) in einem Feldbustelegramm (21) empfangen werden,
- bei dem die Prozessdaten (P1) von dem Feldbuskontrollers (200) zu dem Lokalbuskontroller (300) mittels einer Datenverwaltungseinheit (100) transferiert werden,
- bei dem die Prozessdaten (P1) in einen Speicherbereich (400) durch die Datenverwaltungseinheit (100) kopiert und im Speicherbereich (400) gespeichert werden, und
- bei dem die im Speicherbereich (400) gespeicherten Prozessdaten (P1) durch einen Prozessor (500), insbesondere asynchron zum Zyklusrahmen (CF) ausgelesen werden.

15. Verfahren zum Betrieb einer Schaltung (10) zur Kopplung eines Feldbusses (20) und eines Lokalbusses (30),
- bei dem basierend auf einem Zyklusrahmen (CF) ein Datenpaket (31) mit Prozessdaten (P1) von einem Lokalbuskontroller (300) der Schaltung (10) auf den Lokalbus (30) zyklisch empfangen wird,
- bei dem die mit dem Datenpaket (31) empfangenen Prozessdaten (P1) durch einen Feldbuskontroller (200) der Schaltung (10) in einem Feldbustelegramm (21) gesendet werden,
- bei dem die Prozessdaten (P1) von dem Lokalbuskontroller (300) zu dem Feldbuskontroller (200) mittels einer Datenverwaltungseinheit (100) transferiert werden,
- bei dem die Prozessdaten (P1) in einen Speicherbereich (400) durch die Datenverwaltungseinheit (100) kopiert und im Speicherbereich (400) gespeichert werden, und
- bei dem die im Speicherbereich (400) gespeicherten Prozessdaten (P1) durch einen Prozessor (500), insbesondere asynchron zum Zyklusrahmen (CF) ausgelesen werden.

## Claims

1. Circuit (10) for coupling a field bus (20) and a local bus (30),
- having a field bus controller (200), designed to transmit and receive process data (P1) via the field bus (20),
- having a local bus controller (300), designed to transmit and receive the process data (P1) via the local bus (30),
- having a data management unit (100), wherein the data management unit (100) is connected to the field bus controller (200) and the local bus controller (300), and wherein the data management unit (100) is designed to transfer the process data (P1) between the field bus controller (200) and the local bus controller (300),
- having a memory area (400), wherein the memory area (400) is connected to the data management unit (100) to copy and store the process data (P1), and
- having a processor (500), wherein the processor (500) is connected to the data management unit (100), and wherein the processor (500) is connected to the memory area (400),
in which the processor (500) is designed to configure the data management unit (100) to copy the process data (P1) to the memory area (400),
in which the processor (500) is designed to read the process data (P1) copied to the memory area (400).

2. Circuit according to Claim 1,
in which the data management unit (100) is designed to carry out the transfer of the process data (P1) between the field bus controller (200) and the local bus controller (300) in the course of operation independently of a program sequence of the processor (500).

3. Circuit according to either of the preceding claims,
in which the data management unit (100) has a state machine (115, 125) to control the transfer.

4. Circuit according to one of the preceding claims,
in which the data management unit (100) has an instruction list (IL1, IL2) containing instructions (IS1, IS2) to control the transfer.

5. Circuit according to Claim 4,
in which the instruction list (IL1, IL2) has control data (SD1, SD2) to control the copying.

6. Circuit according to one of the preceding claims,
in which the data management unit (100) is designed to carry out the transfer and the copying at least in part simultaneously.

7. Circuit according to one of the preceding claims,
in which the data management unit (100) has a control output (112, 122) and is designed to control the copying by way of an enable signal (EN1, EN2) at the control output (112, 122).

8. Circuit according to one of the preceding claims,
in which the processor (500) is designed such that the control data (SD1, SD2) can be configured by means of the processor (500) to copy the transferred process data (P1) and not to copy further process data (P2) during the transfer.

9. Circuit according to one of the preceding claims,
in which the processor (500) is designed to evaluate the process data (P1) read from the memory area (400).

10. Circuit according to one of the preceding claims,
in which the processor (500) is designed to output a request signal (REQ1, REQ2) to the data management unit (100),
in which the data management unit (100) is designed to control the copying of the process data (P1) to the memory area (400) on the basis of the request signal (REQ1, REQ2).

11. Circuit according to one of the preceding claims,
in which the data management unit (100) is designed to output an acknowledgement signal (ACK1, ACK2) to the processor (500) after the copying,
in which the processor (500) is designed to read the stored process data (P1) from the memory area (400) on the basis of the acknowledgement signal (ACK1, ACK2).

12. Circuit according to one of the preceding claims,
in which the processor (500) is designed to read the process data (P1) from the memory area (400) asynchronously with respect to a cycle, in particular asynchronously with respect to
- a cycle for receiving the process data (P1) in a field bus message (21) via the field bus (20), and/or
- a cycle for transferring the process data (P1), and/or
- a cycle for transmitting a data packet (31) containing the process data (P1) on the local bus (30).

13. Circuit according to one of the preceding claims,
which circuit has a data line branch (143) for copying the process data (P1),
wherein the data management unit (100) is connected to the local bus controller (300) and the memory area (400) via the data line branch (143), or
wherein the data management unit (100) is connected to the field bus controller (200) and the memory area (400) via the data line branch.

14. Method for operating a circuit (10) for coupling a field bus (20) and a local bus (30),
- in which a data packet (31) containing process data (P1) is cyclically transmitted from a local bus controller (300) of the circuit (10) to the local bus (31) in a cycle frame (CF),
- in which the process data (P1) transmitted by way of the data packet (31) are earlier received by a field bus controller (200) of the circuit (10) in a field bus message (21),
- in which the process data (P1) are transferred from the field bus controller (200) to the local bus controller (300) by means of a data management unit (100),
- in which the process data (P1) are copied to a memory area (400) by the data management unit (100) and stored in the memory area (400), and
- in which the process data (P1) stored in the memory area (400) are read by a processor (500), in particular asynchronously with respect to the cycle frame (CF).

15. Method for operating a circuit (10) for coupling a field bus (20) and a local bus (30),
- in which a data packet (31) containing process data (P1) is cyclically received on the local bus (30) by a local bus controller (300) of the circuit (10) on the basis of a cycle frame (CF),
- in which the process data (P1) received by way of the data packet (31) are transmitted by a field bus controller (200) of the circuit (10) in a field bus message (21),
- in which the process data (P1) are transferred from the local bus controller (300) to the field bus controller (200) by means of a data management unit (100),
- in which the process data (P1) are copied to a memory area (400) by the data management unit (100) and stored in the memory area (400), and
- in which the process data (P1) stored in the memory area (400) are read by a processor (500), in particular asynchronously with respect to the cycle frame (CF).

## Revendications

1. Circuit (10) permettant de coupler un bus de terrain (20) et un bus local (30), comprenant
- un contrôleur de bus de terrain (200) aménagé pour envoyer et recevoir des données de processus (P1) par l'intermédiaire du bus de terrain (20),
- un contrôleur de bus local (300) aménagé pour envoyer et recevoir les données de processus (P1) par l'intermédiaire du bus local (30),
- une unité de gestion de données (100), l'unité de gestion de données (100) étant reliée au contrôleur de bus de terrain (200) et au contrôleur de bus local (300), et l'unité de gestion de données (100) étant aménagée pour transférer les données de processus (P1) entre le contrôleur de bus de terrain (200) et le contrôleur de bus local (300),
- une zone de mémoire (400), la zone de mémoire (400) étant reliée à l'unité de gestion de données (100) pour copier et stocker les données de processus (P1), et
- un processeur (500), le processeur (500) étant relié à l'unité de gestion de données (100), et le processeur (500) étant relié à la zone de mémoire (400),
le processeur (500) étant aménagé pour régler l'unité de gestion de données (100) pour copier les données de processus (P1) dans la zone de mémoire (400),
le processeur (500) étant aménagé pour lire les données de processus (P1) copiées dans la zone de mémoire (400).

2. Circuit selon la revendication 1, dans lequel l'unité de gestion de données (100) est aménagée pour effectuer en cours de fonctionnement le transfert des données de processus (P1) entre le contrôleur de bus de terrain (200) et le contrôleur de bus local (300) indépendamment d'un déroulement de programme du processeur (500).

3. Circuit selon l'une quelconque des revendications précédentes, dans lequel l'unité de gestion de données (100) présente une machine à états (115, 125) pour commander le transfert.

4. Circuit selon l'une quelconque des revendications précédentes, dans lequel l'unité de gestion de données (100) présente une liste d'instructions (IL1, IL2) comprenant des instructions (IS1, IS2) pour commander le transfert.

5. Circuit selon la revendication 4, dans lequel la liste d'instructions (IL1, IL2) présente des données de commande (SD1, SD2) pour commander la copie.

6. Circuit selon l'une quelconque des revendications précédentes, dans lequel l'unité de gestion de données (100) est aménagée pour effectuer le transfert et la copie au moins partiellement en même temps.

7. Circuit selon l'une quelconque des revendications précédentes, dans lequel l'unité de gestion de données (100) présente une sortie de commande (112, 122) et est aménagée pour commander la copie par un signal de validation (EN1, EN2) à la sortie de commande (112, 122) .

8. Circuit selon l'une quelconque des revendications précédentes, dans lequel le processeur (500) est aménagé de sorte que le processeur (500) permet de régler les données de commande (SD1, SD2) afin de copier les données de processus (P1) transférées et de ne pas copier d'autres données de processus (P2) lors du transfert.

9. Circuit selon l'une quelconque des revendications précédentes, dans lequel le processeur (500) est aménagé pour évaluer les données de processus (P1) lues à partir de la zone de mémoire (400).

10. Circuit selon l'une quelconque des revendications précédentes,
le processeur (500) étant aménagé pour sortir un signal de requête (REQ1, REQ2) à l'unité de gestion de données (100),
l'unité de gestion de données (100) étant aménagée pour commander sur la base du signal de requête (REQ1, REQ2) la copie des données de processus (P1) dans la zone de mémoire (400).

11. Circuit selon l'une quelconque des revendications précédentes,
l'unité de gestion de données (100) étant aménagée pour sortir après la copie un signal de confirmation (ACK1, ACK2) à destination du processeur (500),
le processeur (500) étant aménagé pour lire sur la base du signal de confirmation (ACK1, ACK2) les données de processus (P1) stockées à partir de la zone de mémoire (400).

12. Circuit selon l'une quelconque des revendications précédentes,
le processeur (500) étant aménagé pour lire les données de processus (P1) à partir de la zone de mémoire (400) de manière asynchrone par rapport à un cycle, en particulier de manière asynchrone par rapport à
- un cycle de réception des données de processus (P1) dans un télégramme de bus de terrain (21) par l'intermédiaire du bus de terrain (20), et/ou
- un cycle de transfert des données de processus (P1), et/ou
- un cycle d'envoi d'un paquet de données (31) avec les données de processus (P1) sur le bus local (30) .

13. Circuit selon l'une quelconque des revendications précédentes,
qui présente une dérivation de ligne de données (143) pour copier les données de processus (P1),
l'unité de gestion de données (100) étant reliée au contrôleur de bus local (300) et à la zone de mémoire (400) par l'intermédiaire de la dérivation de ligne de données (143), ou
l'unité de gestion de données (100) étant reliée au contrôleur de bus de terrain (200) et à la zone de mémoire (400) par l'intermédiaire de la dérivation de ligne de données.

14. Procédé d'exploitation d'un circuit (10) permettant de coupler un bus de terrain (20) et un bus local (30),
- dans lequel, dans une trame de cycle (CF), un paquet de données (31) avec des données de processus (P1) est envoyé de manière cyclique par un contrôleur de bus local (300) du circuit (10) sur le bus local (31),
- les données de processus (P1) étant envoyées avec le paquet de données (31) sont d'abord reçues par un contrôleur de bus de terrain (200) du circuit (10) dans un télégramme de bus de terrain (21),
- les données de processus (P1) étant transférées du contrôleur de bus de terrain (200) au contrôleur de bus local (300) au moyen d'une unité de gestion de données (100),
- les données de processus (P1) étant copiées dans une zone de mémoire (400) par l'unité de gestion de données (100) et étant stockées dans la zone de mémoire (400), et
- les données de processus (P1) stockées dans la zone de mémoire (400) étant lues par un processeur (500), en particulier de manière asynchrone par rapport à la trame de cycle (CF).

15. Procédé d'exploitation d'un circuit (10) permettant de coupler un bus de terrain (20) et un bus local (30),
- dans lequel, sur la base d'une trame de cycle (CF), un paquet de données (31) avec des données de processus (P1) est reçu de manière cyclique par un contrôleur de bus local (300) du circuit (10) sur le bus local (30),
- les données de processus (P1) reçues avec le paquet de données (31) étant envoyées par un contrôleur de bus de terrain (200) du circuit (10) dans un télégramme de bus de terrain (21),
- les données de processus (P1) étant transférées du contrôleur de bus local (300) au contrôleur de bus de terrain (200) au moyen d'une unité de gestion de données (100),
- les données de processus (P1) étant copiées dans une zone de mémoire (400) par l'unité de gestion de données (100) et étant stockées dans la zone de mémoire (400), et
- les données de processus (P1)stockées dans la zone de mémoire (400) étant lues par un processeur (500), en particulier de manière asynchrone par rapport à une trame de cycle (CF).
